# EUROPEAN PATENT SPECIFICATION

(11) **EP 4 209 713 B1**
(45) Date of publication and mention of the grant of the patent: **27.11.2024**
(21) Application number: 22151003.5
(22) Date of filing: 11.01.2022
(51) Int. Cl.: F23Q 2/50

(54) **FLAME PRODUCING ASSEMBLY**
FLAMMENERZEUGENDE ANORDNUNG
ENSEMBLE DE PRODUCTION DE FLAMME

(43) Date of publication of application: 12.07.2023
(73) Proprietor: BIC Violex Single Member S.A., 14569 Anoixi (GR)
(72) Inventor: Chrysanthakopoulos, Nikolaos, 145 69 Anoixi (GR)
(74) Representative: Peterreins Schley

(56) References cited:
- WO-A1-2020/237157
- CN-U- 211 119 476
- JP-A- 2019 215 072
- JP-A- H08 178 283
- RU-U1- 43 715

## Description

### Technical Field

The present disclosure relates to the field of flame producing assemblies. More specifically, the present disclosure relates to flame producing assemblies comprising thermoresponsive coatings.

### Background

Flame producing assemblies, such as lighters, are commonly handheld devices. The flame producing assemblies may comprise a hood to shield the flame from wind or to protect the user from the heat of the flame. When the flame producing assembly is lit for a prolonged time, part of the thermal energy generated by the flame may be absorbed by the hood. The hood may reach temperatures above 60 °C, which may cause discomfort or harm to the user upon touch. Especially, since flame producing assemblies are commonly handheld devices the user may accidentally touch the hood with his hand. Moreover, the user may place the flame producing assembly into pockets of the user's clothes which may damage the clothes.

Relevant prior art can be found in CN 211 119 476 U.

The present disclosure aims to address one or more of the drawbacks in the prior art.

### Summary

According to a first aspect, the present disclosure relates to a flame producing assembly comprising a hood configured to shield a flame produced by the flame producing assembly from wind and/or protect a user from the heat generated by the flame. Further, the flame producing assembly comprises a thermoresponsive coating provided on the hood. The thermoresponsive coating is configured to undergo a reversible endothermic reaction or a reversible endothermic phase change when heated above about 35°C, more specifically above about 40°C, and in particular above about 50°C.

In embodiments, the thermoresponsive coating may be configured to absorb water below a lower critical solution temperature and to release water above the lower critical solution temperature.

In embodiments, the thermoresponsive coating may comprise a thermoresponsive polymer.

In embodiments, wherein the thermoresponsive polymer may be configured to be in an expanded state below the lower critical solution temperature and a collapsed state above the lower critical solution temperature.

In embodiments, the lower critical solution temperature of the thermoresponsive coating may be between about 35°C to about 55°C, more specifically between about 40°C to about 50°C, and in particular between about 43°C to about 47°C.

In embodiments, the thermoresponsive polymer may comprise poly(N-isopropylacrylamide).

In embodiments, the thermoresponsive polymer may comprise poly(N-vinylcaprolactam).

In embodiments, the thermoresponsive polymer may comprise hydroxypropyl cellulose, poly[2-(dimethylamino)ethyl methacrylate], poly-2-isopropyl-2-oxazoline and/or polyvinyl methyl ether.

In embodiments, the thermoresponsive coating may comprise a network of crosslinked polymer chains, wherein the crosslinked polymer chains comprise hydrophilic polymer chains.

In embodiments, the network of crosslinked polymer chains may be a hydrogel.

In embodiments, the hydrogel may be configured to absorb water.

In embodiments, the hydrogel may comprise sodium alginate, agarose, methylcellulose, hyaluronan, collagen, gelatin, fibrin, elastin like polypeptides, polyvinyl alcohol, polyethylene glycol, sodium polyacrylate, acrylate polymers, copolymers thereof and/or mixtures thereof.

In embodiments, the hood may at least partly surround a gas release area.

In embodiments, the thermoresponsive coating may be applied to the surface of the hood.

In embodiments, the thermoresponsive coating may be applied only on sections of the surface of the hood.

In embodiments, the hood may comprise a metal, more specifically steel and in particular cold rolled carbon steel.

In embodiments, the hood may comprise a precious metal, in particular silver.

In embodiments, the hood may comprise a ceramic, in particular ceramic zirconium carbide and/or ceramic aluminum nitride.

In embodiments, the hood may comprise graphite.

In embodiments, the hood may comprise one or more openings.

In embodiments, the hood may comprise a cavity formed by at least one plate.

In embodiments, the thermoresponsive coating may be applied to a surface of at least one plate, wherein the surface faces towards the cavity.

In embodiments, the thermoresponsive coating may comprise a porous matrix, configured to incorporate the thermoresponsive polymer.

In embodiments, the porous matrix may be a metal organic framework.

In embodiments, the metal organic framework may comprise MIL-101(Cr) MOF.

In embodiments, the thermoresponsive coating may have a thickness between about 10 µm to about 2000 µm, more specifically about 50 µm to about 1000 µm and in particular between about 250 µm to about 750 µm.

In embodiments, the specific water absorption capacity of the thermoresponsive coating may be at least about 0.1 g/g, more specifically at least about 1.2 g/g, and in particular at least about 9.0 g/g.

In embodiments, the molar mass average of the thermoresponsive polymer may be between 1,000 g/mol to about 100,000 g/mol, more specifically between about 5000 g/mol to about 70000 g/mol and in particular between about 10000 g/mol to about 50000 g/mol.

In embodiments, the thermoresponsive coating may comprise between about 10 wt.-% to about 80 wt.-%, more specifically between about 20 wt.-% to about 70 wt.-% and in particular between about 30 wt.-% to about 60 wt.-% of the thermoresponsive polymer, relative to the total weight of the thermoresponsive coating excluding water.

In embodiments, the thermoresponsive coating may further comprise a salt, in particular potassium chloride.

In embodiments, the thermoresponsive coating may comprise about 10 wt.-% to about 60 wt.-%, more specifically between about 20 wt.-% to about 50 wt.-% and in particular between about 30 wt.-% to about 40 wt.-% of salt, relative to the total weight of the thermoresponsive coating excluding water.

In embodiments, the thermoresponsive coating may further comprise one or more cross-linking agent(s) and/or reaction products of one or more cross-linking agent(s) and the thermoresponsive polymer, in particular di(ethylene glycol) divinyl ether and/or N,N'-methylene-bis-acrylamide and reaction products thereof.

In embodiments, the thermoresponsive coating may be more hydrophilic at temperatures below the lower critical solution temperature than at temperatures above the lower critical solution temperature.

In embodiments, the thermoresponsive coating may be more hydrophobic at temperatures above the lower critical solution temperature than at temperatures below the lower critical solution temperature.

In embodiments, the thermoresponsive polymer may be more hydrophilic at temperatures below the lower critical solution temperature than at temperatures above the lower critical solution temperature.

In embodiments, the thermoresponsive polymer may be more hydrophobic at temperatures above the lower critical solution temperature than at temperatures below the lower critical solution temperature.

In embodiments, the flame producing assembly may comprise an adhesive configured to improve the adhesion between the thermoresponsive coating and the hood.

In embodiments, the flame producing assembly may comprise a primer layer configured to improve the adhesion between the thermoresponsive coating and the hood.

In embodiments, the hood may have a surface roughness average of about 1.6 µm to about 50 µm, more specifically about 3.2 µm to about 25 µm and in particular about 6.3 µm and about 12.5 µm.

In embodiments, the hood or parts thereof may be plasma-treated, in particular plasma-activated, prior to application of the thermoresponsive coating.

In a second aspect, the present disclosure relates to a process for manufacturing a flame producing assembly according to any preceding embodiment, wherein the thermoresponsive coating is applied to the substrate by chemical vapor deposition.

In a third and unclaimed aspect, the present disclosure relates to a process for manufacturing a flame producing assembly according to any preceding embodiment, wherein the thermoresponsive coating is applied to the substrate by drop casting.

In a fourth and unclaimed aspect, the present disclosure relates to a process for manufacturing a flame producing assembly according to any preceding embodiment, wherein the thermoresponsive coating is applied to the substrate by spin coating.

In a fifth and unclaimed aspect, the present disclosure relates to a process for manufacturing a flame producing assembly according to any preceding embodiment, wherein the thermoresponsive coating is applied to the substrate by dip coating.

In a sixth and unclaimed aspect, the present disclosure relates to a process for manufacturing a flame producing assembly according to any preceding embodiment, wherein the thermoresponsive coating is applied to the substrate by a two step grafting method.

In a seventh and unclaimed aspect, the present disclosure relates to a flame producing assembly comprising a thermoresponsive coating. The thermoresponsive coating is configured to absorb water below a lower critical solution temperature and to release water above the lower critical solution temperature.

In examples according to the seventh aspect, the lower critical solution temperature of the thermoresponsive coating may be between about 35°C to about 55°C, more specifically between about 40°C to about 50°C, and in particular between about 43°C to about 47°C.

In examples according to the seventh aspect, the flame producing assembly may further comprise a hood configured to shield the flame of the flame producing assembly from wind and/or protect the user from the heat of the flame.

### Description of the Drawings

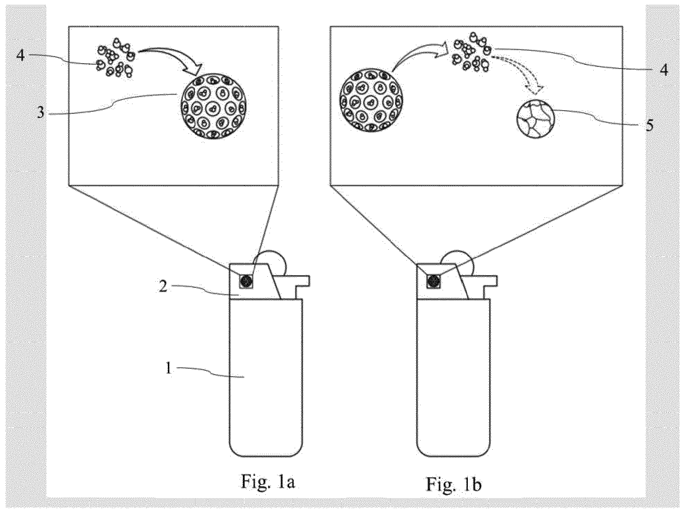

Fig. 1a shows a flame producing assembly comprising a thermoresponsive coating absorbing water.
Fig. 1b shows a flame producing assembly comprising a thermoresponsive coating releasing water.

### Detailed Description

Hereinafter, a detailed description will be given of the present disclosure. The terms or words used in the description and the aspects of the present disclosure are not to be construed limitedly as only having common-language or dictionary meanings and should, unless specifically defined otherwise in the following description, be interpreted as having their ordinary technical meaning as established in the relevant technical field. The detailed description will refer to specific embodiments to better illustrate the present disclosure, however, it should be understood that the presented disclosure is not limited to these specific embodiments.

Flame producing assemblies, such as lighters, are commonly designed having a container to store a flammable material, that will be ignited to produce a flame. The flammable material is generally a liquefied petroleum gas (LPG), that is filled under pressure in the container of the lighter through a filling valve of the lighter. During release of the LPG from the container through a release device, in particular an exit valve arranged in the lighter, the gas expands and is mixed with the direct surrounding air. The mixture of gas with the oxygen contained in the surrounding air is ignited at the exit valve of the lighter to produce a flame. However, parts of the flame producing assemblies, in particular a hood (2), may absorb thermal energy from the flame, which may heat them to temperatures above 60 °C. If the user touches the hood (2), these increased temperatures may lead to user discomfort or even tissue damage.

Accordingly, in a first aspect, the present disclosure relates to a flame producing assembly (1) comprising a hood (2) configured to shield a flame produced by the flame producing assembly (1) from wind and/or protect a user from the heat generated by the flame. Further, the flame producing assembly (1) comprises a thermoresponsive coating (3) provided on the hood (2). The thermoresponsive coating (3) is configured to undergo a reversible endothermic reaction or a reversible endothermic phase change when heated above about 35°C, more specifically above about 40°C, and in particular above about 50°C.

Without wishing to be bound by theory, the reversible endothermic reaction or a reversible endothermic phase change may absorb thermal energy. A thermoresponsive coating (3) applied to a hood (2) may be in thermal contact with the hood (2). Thermal energy produced by the flame and absorbed by the hood (2) may be transferred to the thermoresponsive coating (3). The thermal energy transferred to the thermoresponsive coating (3) may be at least partly absorbed by the endothermic reaction or the reversible endothermic phase change. Hence, the hood (2) may require more thermal energy to be heated to a higher temperature. As a result, the provided thermoresponsive coating (3) may lead to a slower heating of the hood (2). Hence, the flame may need to be lit for a longer time for the hood (2) to reach temperatures above 60 °C which may protect the user.

Without wishing to be bound by theory, after the flame is extinguished, the endothermic reaction or endothermic phase change may be reversed and the thermoresponsive coating (3) may release stored thermal energy. The release of the stored thermal energy may occur at temperatures below 60 °C. Hence, the release of the stored thermal energy may not raise the temperature of the hood (2) above 60 °C. Subsequently, the thermoresponsive coating (3) may again be ready to absorb thermal energy.

That the endothermic reaction or reversible endothermic phase change only occurs when heated above a temperature of about 35°C, above about 40°C or above 50°C may be advantageous in circumstances. If the reaction or phase change temperature were lower, the thermoresponsive coating (3) may perform its mode of action due to the body heat of the user or due to high temperatures of environment, e.g. warm ambient air. If the thermoresponsive coating (3) performs its mode of action due to other factors than the thermal energy provided by the flame produced by the flame producing assembly (1), it may not be able to absorb thermal energy from the flame anymore as the phase change or chemical reaction may have already occurred. Further, the reversion of the reversible chemical reaction or reversible phase change may not be possible as long as the temperature of the thermoresponsive coating (3) remains above the reaction or phase change temperature. If the reaction or phase change temperature is higher, the thermoresponsive coating (3) may only perform its mode of action when the hood (2) reaches temperatures which pose a hazard to the user.

In embodiments, the thermoresponsive coating (3) may be configured to absorb water below a lower critical solution temperature and to release water above the lower critical solution temperature. Without wishing to be bound by theory, a flame producing assembly (1) according to the embodiment may exhibit a mode of action as illustrated in **Fig. 1a** and **Fig. 1b**. **Fig. 1a** shows a flame producing assembly (1), wherein a thermoresponsive coating (3) on a hood (2) exhibits a temperature below the lower critical solution temperature. As a result, the thermoresponsive coating (3) may absorb water from the environment, in particular gaseous water (4) from ambient air. In Fig. 1b the thermoresponsive coating (3) exhibits a temperature above the lower critical solution temperature, e.g. due to thermal energy from a flame. The the thermoresponsive coating (3) may release previously absorbed water in the form of gaseous water (4). The release of water may be a reversible endothermic reaction or reversible endothermic phase change. The released gaseous water (4) may condensate to form liquid water (5). Further, the liquid water (5) may evaporate withdrawing thermal energy from the thermoresponsive coating (3) corresponding to its enthalpy of vaporization. Within the context of this disclosure, the absorption, release and evaporation of water may also be regarded as a reversible endothermic phase change. The withdrawal of thermal energy may cool the thermoresponsive coating (3) and the hood (2) in thermal contact with the thermoresponsive coating (3). When the temperature of the thermoresponsive coating (3) falls below the lower critical solution temperature the thermoresponsive coating (3) may absorb gaseous water (4) again. The enthalpy of vaporization of water is high at about 40660 J/mol, hence, small amounts of water may absorb high amounts of thermal energy which may reduce the required weight and volume of the thermoresponsive coating (3). Further, the evaporation of water may remove part of the thermal energy entirely from the thermoresponsive coating (3) and/or hood (2). Hence, the removed thermal energy may not require dissipation after the temperature of the thermoresponsive polymer falls below the lower critical solution temperature. As a result, the temperature of the thermoresponsive coating (3) may return to the ambient temperature more rapidly compared to other reversible endothermic reactions or reversible endothermic phase changes.

### Thermoresponsive Polymer

In embodiments, the thermoresponsive coating (3) may comprise a thermoresponsive polymer. The term "thermoresponsive polymer" is well known in the art. Within this disclosure the term may in particular refer to polymers that exhibit a drastic and discontinuous change of their physical properties with temperature. Some thermoresponsive polymers may exhibit a drastic, discontinuous and reversible change of their conformation with temperature.

In embodiments, wherein the thermoresponsive polymer may be configured to be in an expanded state below the lower critical solution temperature and a collapsed state above the lower critical solution temperature. The thermoresponsive polymer may be more hydrophobic in its collapsed state compared to its expanded state. Without wishing to be bound by theory, in the expanded state the thermoresponsive polymer may form hydrogen bonds with surrounding water molecules leading to absorption. The hydrogen bonds may form in particular due to interactions with polar side groups of the thermoresponsive polymer. When the thermoresponsive polymer collapses the water molecules may not be able to interact with the polar side groups anymore as the thermoresponsive polymer coils up. As a result, the water may be released or desorbed.

In embodiments, the lower critical solution temperature of the thermoresponsive coating (3) may be between about 35°C to about 55°C, more specifically between about 40°C to about 50°C, and in particular between about 43°C to about 47°C. The lower critical solution temperatures as defined above may be advantageous in circumstances, as the thermoresponsive coating (3) may perform its mode of action above ambient temperatures, but below temperatures already potentially hazardous to the user. In embodiments, the lower critical solution temperature of the thermoresponsive polymer may be between about 35°C to about 55°C, more specifically between about 40°C to about 50°C, and in particular between about 43°C to about 47°C.

In embodiments, the thermoresponsive polymer may comprise poly(N-isopropylacrylamide).

In embodiments, the thermoresponsive polymer may comprise poly(N-vinylcaprolactam).

In embodiments, the thermoresponsive polymer may comprise hydroxypropyl cellulose, poly[2-(dimethylamino)ethyl methacrylate], poly-2-isopropyl-2-oxazoline and/or polyvinyl methyl ether.

In embodiments, the thermoresponsive polymer may form a three-dimensional network. For example, poly(N-isopropylacrylamide) may form a three-dimensional network when cross-linked with N,N'-methylene-bis-acrylamide.

### Hydrophilic Network

In embodiments, the thermoresponsive coating (3) may comprise a network of crosslinked polymer chains, wherein the crosslinked polymer chains comprise hydrophilic polymer chains.

In embodiments, the network of crosslinked polymer chains may be a hydrogel.

In embodiments, the hydrogel may be configured to absorb water. A hydrogel configured to absorb water may increase the specific water absorption capacity of the thermoresponsive coating (3). The term "specific water absorption capacity" within this disclosure may refer to the maximum weight of water absorbed per weight unit of an absorbent. While the thermoresponsive polymer may absorb water itself, mixing the thermoresponsive polymer with a hydrogel may lead to a higher specific water absorption capacity.

The thermoresponsive polymer together with the hydrogel may form an interpenetrating polymer network. The term "interpenetrating polymer network" is known in the art. Within this disclosure it may refer in particular to polymers comprising at least two different types of macromolecules. The macromolecules may form networks, wherein the networks may be at least partially interlaced on a polymer scale but not covalently bonded to each other. In embodiments, one of the at least two different types of macromolecules may be that constituting the thermoresponsive polymer and the other may be that constituting the hydrogel. As a result, the thermoresponsive polymer's macromolecules may interpenetrate the hydrogel's macromolecules. Without wishing to be bound by theory, it is believed that at temperatures below the lower critical solution temperature the interpenetrating polymer network may absorb water, in particular due to the presence of polar side groups. The absorption of water may lead to an increase in volume of the interpenetrating polymer network. At temperatures above the lower critical solution temperature the thermoresponsive polymer's macromolecules may collapse and release absorbed water. The collapse of the thermoresponsive polymer's macromolecules and/or the release of water may lead to a volume decrease of the interpenetrating polymer network which in turn may lead to a release of water by the hydrogel's macromolecules.

The synthesis of interpenetrating networks is known in the art. For example, in a first step poly(N-isopropylacrylamide) may form a first three-dimensional network when cross-linked with N,N'-methylene-bis-acrylamide. The first three-dimensional network may then be suspended in an aqueous solution comprising for example sodium alginate. The sodium alginate may then be crosslinked by the addition of CaCl₂ to form a second three-dimensional network which interlaces the first three-dimensional network.

In embodiments, the hydrogel may comprise sodium alginate, agarose, methylcellulose, hyaluronan, collagen, gelatin, fibrin, elastin like polypeptides, polyvinyl alcohol, polyethylene glycol, sodium polyacrylate, acrylate polymers, copolymers thereof and/or mixtures thereof.

### Hood

In embodiments, the hood (2) may at least partly surround a gas release area. The gas release area may be the area where the flame is produced.

The thermoresponsive coating is provided on the hood. In embodiments, the thermoresponsive coating (3) may be applied to the surface of the hood (2). Application to the surface of the hood (2) may lead to thermal contact between hood (2) and thermoresponsive coating (3).

In embodiments, the thermoresponsive coating (3) may be applied only on sections of the surface of the hood (2). For example, it may be used to coat only surfaces facing away from the flame, as surfaces facing towards the flame may reach temperatures which may damage the thermoresponsive coating (3).

In embodiments, the hood (2) may comprise a metal, more specifically steel and in particular cold rolled carbon steel. Metal hood may be efficiently produced and may have a high heat conductivity.

In embodiments, the hood (2) may comprise a precious metal, in particular silver. A silver hood may have a very high heat conductivity. Further, a silver hood may be aesthetically pleasing to the user.

In embodiments, the hood (2) may comprise a ceramic, in particular ceramic zirconium carbide and/or ceramic aluminum nitride. Ceramics may have high mechanical stability, which may protect the hood (2) from damage. Some ceramics may have a high heat conductivity.

In embodiments, the hood (2) may comprise graphite.

In embodiments, the hood (2) may comprise one or more openings.

In embodiments, the hood (2) may comprise a cavity formed by at least one plate.

In embodiments, the thermoresponsive coating (3) may be applied to a surface of at least one plate, wherein the surface faces towards the cavity. Applying the thermoresponsive coating (3) on a surface facing towards the cavity, in particular if the hood (2) comprises one or more openings, may be advantageous in circumstances. The surrounding plate may protect the thermoresponsive coating (3) from damage, for example due to abrasion by coming into contact with the user's hand or clothes. Due to the openings the thermoresponsive coating (3) may still absorb water from the environment, in particular ambient air. Further, the thermoresponsive coating (3) may still release water into the environment, in particular, in the form of evaporated water.

### Metal Organic Framework

In embodiments, the thermoresponsive coating (3) may comprise a porous matrix, configured to incorporate the thermoresponsive polymer. In embodiments, the porous matrix may be configured to incorporate an interpenetrating polymer network. A porous matrix may have increased mechanical stability compared to the thermoresponsive polymer and/or interpenetrating polymer network. Hence, the porous matrix may protect the thermoresponsive polymer and/or interpenetrating polymer network from damage, e.g. due to abrasion.

In embodiments, the porous matrix may be a metal organic framework.

The term "metal organic framework" is well known in the art. Within this disclosure, it may in particular refer to metal ions or clusters coordinated to organic ligands forming one-, two-, or three-dimensional structures. The resulting structures may be porous.

In embodiments, the metal organic framework may comprise MIL-101(Cr) MOF.

### Coating

In embodiments, the thermoresponsive coating (3) may have a thickness between about 10 µm to about 2000 µm, more specifically about 50 µm to about 1000 µm and in particular between about 250 µm to about 750 µm. A higher thickness of the thermoresponsive coating (3) may allow the thermoresponsive coating (3) to absorb more thermal energy per surface area. However, a higher thickness may also increase the weight of the lighter. Moreover, if the thermoresponsive coating (3) is configured to absorb and release water, in particular from and to ambient air, the surface of the thermoresponsive coating (3) may limit the water absorption and desorption rate. As a result, a thicker thermoresponsive coating (3) may require more time to be saturated with water. As a result, beyond a certain thickness, a higher thickness of the thermoresponsive coating (3) may not lead to a higher amount of water absorbed and released, if the lighter is regularly used.

In embodiments, the specific water absorption capacity of the thermoresponsive coating (3) may be at least about 0.1 g/g, more specifically at least about 1.2 g/g, and in particular at least about 9.0 g/g.

In embodiments, the specific water absorption capacity of the thermoresponsive coating (3) may be between about 0.1 g/g to about 300.0 g/g, more specifically between about 50.0 g/g to about 1.2 g/g, and in particular between about 0.4 g/g and about 9.0 g/g.

In embodiments, the specific water absorption capacity of the thermoresponsive coating (3) may be between about 0.1 g/g to about 2.0 g/g, more specifically between about 0.2 g/g to about 1.2 g/g, and in particular between about 0.4 g/g and about 1.0 g/g.

A thermoresponsive coating (3) with a higher specific water absorption capacity may be able to absorb more water and as a result more thermal energy compared to a thermoresponsive coating (3) with a lower specific water absorption capacity.

The specific absorption capacity may be measured by first immersing a sample of 1 g of the thermoresponsive coating (3) in water for 24 hours. The used water shall be deionized water, class 3 according to OENORM EN ISO 3696:1995-08-01. Subsequently, the sample is freeze dried to remove the water. The freeze drying may be performed with any commercially available freeze dryer, as long as it can lower the water content below at least 4 wt.-%. Finally, the sample is weighed again, and the weight compared to the weight measured after immersion in water.

### LCTS Adjustment

In embodiments, the molar mass average of the thermoresponsive polymer may be between 1000 g/mol to about 100000 g/mol more specifically between about 5000 g/mol to about 70000 g/mol and in particular between about 10000 g/mol to about 50000 g/mol. The molar mass average ma be the weight-average molecular weight of the thermoresponsive polymer. The molar mass average may be measured according to ASTM D4001-20.

A higher molar mass average of the thermoresponsive polymer may increase the lower critical solution temperature of the thermoresponsive coating (3) and vice versa.

In embodiments, the thermoresponsive coating (3) may comprise between about 10 wt.-% to about 80 wt.-%, more specifically between about 20 wt.-% to about 70 wt.-% and in particular between about 30 wt.-% to about 60 wt.-% of the thermoresponsive polymer, relative to the total weight of the thermoresponsive coating (3) excluding water.

In embodiments, the thermoresponsive coating (3) may further comprise a salt, in particular potassium chloride.

In embodiments, the thermoresponsive coating (3) may comprise between about 10 wt.-% to about 60 wt.-%, more specifically between about 20 wt.-% to about 50 wt.-% and in particular between about 30 wt.-% to about 40 wt.-% of salt, relative to the total weight of the thermoresponsive coating (3) excluding water.

A higher amount of salt may increase the lower critical solution temperature of the thermoresponsive coating (3) and vice versa.

In embodiments, the thermoresponsive coating (3) may further comprise one or more cross-linking agent(s) and/or reaction products of one or more cross-linking agent(s) and the thermoresponsive polymer, in particular di(ethylene glycol) divinyl ether and reaction products thereof. In embodiments, the cross-linking agent may be N,N'-methylene-bis-acrylamide. The thermoresponsive polymer may form a three-dimensional network with cross-linking agent(s). Cross-linking may be advantageous for forming and interpenetrating polymer network and/or the mechanical stability of the thermoresponsive coating (3).

In embodiments, the thermoresponsive coating (3) may be more hydrophilic at temperatures below the lower critical solution temperature than at temperatures above the lower critical solution temperature.

In embodiments, the thermoresponsive coating (3) may be more hydrophobic at temperatures above the lower critical solution temperature than at temperatures below the lower critical solution temperature.

In embodiments, the thermoresponsive polymer may be more hydrophilic at temperatures below the lower critical solution temperature than at temperatures above the lower critical solution temperature.

In embodiments, the thermoresponsive polymer may be more hydrophobic at temperatures above the lower critical solution temperature than at temperatures below the lower critical solution temperature.

A change in hydrophilicity and hydrophobicity of the thermoresponsive polymer may allow the the thermoresponsive coating (3) to perform its mode of action as described above. In particular, as an increased hydrophilicity may lead the thermoresponsive polymer to absorb more water and an increased hydrophilicity may lead the thermoresponsive polymer to release more water.

### Adhesion of thermoresponsive coating

In embodiments, the flame producing assembly (1) may comprise an adhesive configured to improve the adhesion between the thermoresponsive coating (3) and the hood (2).

In embodiments, the flame producing assembly (1) may comprise a primer layer configured to improve the adhesion between the thermoresponsive coating (3) and the hood (2).

In embodiments, the hood (2) may have a surface roughness average of about 1.6 µm to about 50 µm, more specifically about 3.2 µm to about 25 µm and in particular about 6.3 µm and about 12.5 µm. A surface roughness as defined above may increase the adhesion of the between the thermoresponsive coating (3) and the hood (2).

In embodiments, the hood (2) or parts thereof may be plasma-treated, in particular plasma-activated, prior to application of the thermoresponsive coating (3). Plasma-treatment, in particular plasma-activation, prior to application of the thermoresponsive coating (3) may increase the adhesion between the thermoresponsive coating (3) and the hood (2).

An increased adhesion between thermoresponsive coating (3) and the hood (2) may result in a longer lifetime of the thermoresponsive coating (3), e.g. as it may not be wiped of upon contact by the user or other objects.

In a second aspect, the present disclosure relates to a process for manufacturing a flame producing assembly (1) according to any preceding embodiment, wherein the thermoresponsive coating (3) is applied to the substrate by chemical vapor deposition.

In a third and unclaimed aspect, the present disclosure relates to a process for manufacturing a flame producing assembly (1) according to any preceding embodiment, wherein the thermoresponsive coating (3) is applied to the substrate by drop casting.

In a fourth and unclaimed aspect, the present disclosure relates to a process for manufacturing a flame producing assembly (1) according to any preceding embodiment, wherein the thermoresponsive coating (3) is applied to the substrate by spin coating.

In a fifth and unclaimed aspect, the present disclosure relates to a process for manufacturing a flame producing assembly (1) according to any preceding embodiment, wherein the thermoresponsive coating (3) is applied to the substrate by dip coating.

In a sixth and unclaimed aspect, the present disclosure relates to a process for manufacturing a flame producing assembly (1) according to any preceding embodiment, wherein the thermoresponsive coating (3) is applied to the substrate by a two step grafting method.

In a seventh and unclaimed aspect, the present disclosure relates to a flame producing assembly comprising a thermoresponsive coating. The thermoresponsive coating is configured to absorb water below a lower critical solution temperature and to release water above the lower critical solution temperature.

In examples according to the seventh aspect, the lower critical solution temperature of the thermoresponsive coating may be between about 35°C to about 55°C, more specifically between about 40°C to about 50°C, and in particular between about 43°C to about 47°C.

In examples according to the seventh aspect, the flame producing assembly may further comprise a hood configured to shield the flame of the flame producing assembly from wind and/or protect the user from the heat of the flame.

In examples according to the seventh aspect, the flame producing assembly may further comprise one or more of the features specified for the first aspect of the present disclosure.

## Claims

1. A flame producing assembly comprising:
a hood configured to shield a flame produced by the flame producing assembly from wind and/or protect a user from heat generated by the flame; **characterized by** a thermoresponsive coating provided on the hood, wherein the thermoresponsive coating is configured to undergo a reversible endothermic reaction or a reversible endothermic phase change when heated above about 35°C, more specifically above about 40°C, and in particular above about 50°C.

2. The flame producing assembly of claim 1, wherein the thermoresponsive coating is configured to absorb water below a lower critical solution temperature and to release water above the lower critical solution temperature.

3. The flame producing assembly according to claim 1 or 2, wherein the thermoresponsive coating comprises a thermoresponsive polymer.

4. The flame producing assembly according to claim 3, wherein the thermoresponsive polymer is configured to be in an expanded state below the lower critical solution temperature and in a collapsed state above the lower critical solution temperature.

5. The flame producing assembly according to any preceding claim, wherein the lower critical solution temperature of the thermoresponsive coating is between about 35°C to about 55°C, more specifically between about 40°C to about 50°C, and in particular between about 43°C to about 47°C.

6. The flame producing assembly according to any one of claims 3 to 5, wherein the thermoresponsive polymer comprises one or more of: poly(N-isopropylacrylamide), poly(N-vinylcaprolactam), hydroxypropyl cellulose, poly[2-(dimethylamino)ethyl methacrylate], poly-2-isopropyl-2-oxazoline and/or polyvinyl methyl ether.

7. The flame producing assembly according to any preceding claim, wherein the crosslinked polymer chains comprise hydrophilic polymer chains.

8. The flame producing assembly according to claim 7, wherein the network of crosslinked polymer chains is a hydrogel, in particular a hydrogel which is configured to absorb water.

9. The flame producing assembly according to any preceding claim, wherein the thermoresponsive coating has a thickness between about 10 µm to about 2000 µm, more specifically about 50 µm to about 1000 µm and in particular between about 250 µm to about 750 µm.

10. The flame producing assembly according to any preceding claim, wherein the specific water absorption capacity of the thermoresponsive coating is at least about 0.1 g/g, more specifically at least about 1.2 g/g, and in particular at least about 9.0 g/g.

11. The flame producing assembly according to any one of claims 3 to 10, wherein the thermoresponsive coating comprises between about 10 wt.-% to about 80 wt.-%, more specifically between about 20 wt.-% to about 70 wt.-% and in particular between about 30 wt.-% to about 60 wt.-% of the thermoresponsive polymer, relative to the total weight of the thermoresponsive coating excluding water.

12. The flame producing assembly according to any preceding claim, wherein the thermoresponsive coating further comprises a salt, in particular potassium chloride.

13. The flame producing assembly according to claim 12, wherein the thermoresponsive coating comprises between about 10 wt.-% to about 60 wt.-%, more specifically between about 20 wt.-% to about 50 wt.-% and in particular between about 30 wt.-% to about 40 wt.-% of salt, relative to the total weight of the thermoresponsive coating excluding water.

14. The flame producing assembly according to any preceding claim, wherein the thermoresponsive coating is more hydrophilic at temperatures below the lower critical solution temperature than at temperatures above the lower critical solution temperature and/or wherein the thermoresponsive coating is more hydrophobic at temperatures above the lower critical solution temperature than at temperatures below the lower critical solution temperature.

15. A process for manufacturing the flame producing assembly according to any of the preceding claims, wherein the thermoresponsive coating is applied to the substrate by chemical vapor deposition.

## Patentansprüche

1. Eine Flammenerzeugungsanordnung, umfassend:
eine Haube, die konfiguriert ist, um eine Flamme, die durch die Flammenerzeugungsanordnung erzeugt wird, vor Wind abzuschirmen und/oder einen Benutzer vor Hitze, die durch die Flamme erzeugt wird, zu schützen; **gekennzeichnet durch**
eine thermoresponsive Beschichtung, die auf der Haube bereitgestellt ist, wobei die thermoresponsive Beschichtung konfiguriert ist, um eine reversible endotherme Reaktion oder einen reversiblen endothermen Phasenwechsel zu erfahren, wenn sie über etwa 35 °C, spezieller über etwa 40 °C und insbesondere über etwa 50 °C erhitzt wird.

2. Die Flammenerzeugungsanordnung nach Anspruch 1, wobei die thermoresponsive Beschichtung konfiguriert ist, um Wasser unterhalb einer unteren kritischen Lösungstemperatur aufzunehmen und Wasser oberhalb der unteren kritischen Lösungstemperatur freizusetzen.

3. Die Flammenerzeugungsanordnung nach Anspruch 1 oder 2, wobei die thermoresponsive Beschichtung ein thermoresponsives Polymer umfasst.

4. Die Flammenerzeugungsanordnung nach Anspruch 3, wobei das thermoresponsive Polymer konfiguriert ist, um in einem ausgedehnten Zustand unterhalb der unteren kritischen Lösungstemperatur und in einem zusammengefalteten Zustand oberhalb der unteren kritischen Lösungstemperatur zu sein.

5. Die Flammenerzeugungsanordnung nach einem der vorstehenden Ansprüche, wobei die untere kritische Lösungstemperatur der thermoresponsiven Beschichtung zwischen etwa 35 °C bis etwa 55 °C, spezieller zwischen etwa 40 °C bis etwa 50 °C und insbesondere zwischen etwa 43 °C bis etwa 47 °C liegt.

6. Die Flammenerzeugungsanordnung nach einem der Ansprüche 3 bis 5, wobei das thermoresponsive Polymer eines oder mehrere von Poly(N-isopropylacrylamid), Poly(N-vinylcaprolactam), Hydroxypropylcellulose, Poly[2-(dimethylamino)ethylmethacrylat], Poly-2-isopropyl-2-oxazolin und/oder Polyvinylmethylether umfasst.

7. Die Flammenerzeugungsanordnung nach einem der vorstehenden Ansprüche, wobei die vernetzten Polymerketten hydrophile Polymerketten umfassen.

8. Die Flammenerzeugungsanordnung nach Anspruch 7, wobei das Netzwerk aus vernetzten Polymerketten ein Hydrogel, insbesondere ein Hydrogel, das konfiguriert ist, um Wasser aufzunehmen, ist.

9. Die Flammenerzeugungsanordnung nach einem der vorstehenden Ansprüche, wobei die thermoresponsive Beschichtung eine Dicke zwischen etwa 10 µm bis etwa 2000 µm, spezieller etwa 50 µm bis etwa 1000 µm und insbesondere zwischen etwa 250 µm bis etwa 750 µm aufweist.

10. Die Flammenerzeugungsanordnung nach einem der vorstehenden Ansprüche, wobei die spezielle Wasseraufnahmekapazität der thermoresponsiven Beschichtung mindestens etwa 0,1 g/g, spezieller mindestens etwa 1,2 g/g und insbesondere mindestens etwa 9,0 g/g beträgt.

11. Die Flammenerzeugungsanordnung nach einem der Ansprüche 3 bis 10, wobei die thermoresponsive Beschichtung zwischen etwa 10 Gew.-% bis etwa 80 Gew.-%, spezieller zwischen etwa 20 Gew.-% bis etwa 70 Gew.-% und insbesondere zwischen etwa 30 Gew.-% bis etwa 60 Gew.-% des thermoresponsiven Polymers, bezogen auf das Gesamtgewicht der thermoresponsiven Beschichtung, ausschließlich Wasser, umfasst.

12. Die Flammenerzeugungsanordnung nach einem der vorstehenden Ansprüche, wobei die thermoresponsive Beschichtung ferner ein Salz, insbesondere Kaliumchlorid, umfasst.

13. Die Flammenerzeugungsanordnung nach Anspruch 12, wobei die thermoresponsive Beschichtung zwischen etwa 10 Gew.-% bis etwa 60 Gew.-%, spezieller zwischen etwa 20 Gew.-% bis etwa 50 Gew.-% und insbesondere zwischen etwa 30 Gew.-% bis etwa 40 Gew.-% Salz, bezogen auf das Gesamtgewicht der thermoresponsiven Beschichtung, ausschließlich Wasser, umfasst.

14. Die Flammenerzeugungsanordnung nach einem der vorstehenden Ansprüche, wobei die thermoresponsive Beschichtung bei Temperaturen unterhalb der unteren kritischen Lösungstemperatur hydrophiler als bei Temperaturen oberhalb der unteren kritischen Lösungstemperatur ist und/oder wobei die thermoresponsive Beschichtung bei Temperaturen oberhalb der unteren kritischen Lösungstemperatur hydrophober als bei Temperaturen unterhalb der unteren kritischen Lösungstemperatur ist.

15. Ein Verfahren zum Herstellen der Flammenerzeugungsanordnung nach einem der vorstehenden Ansprüche, wobei die thermoresponsive Beschichtung auf das Substrat durch chemische Gasphasenabscheidung aufgebracht wird.

## Revendications

1. Un ensemble de production de flamme comprenant :
une hotte conçue pour protéger du vent une flamme produite par l'ensemble de production de flammes et/ou protéger un utilisateur de la chaleur générée par la flamme ; **caractérisé par**
un revêtement thermosensible pourvu sur la hotte, dans lequel le revêtement thermosensible est conçu pour subir une réaction endothermique réversible ou un changement de phase endothermique réversible lorsqu'il est chauffé au-dessus de 35 °C environ, plus précisément au-dessus de 40 °C environ, et en particulier au-dessus de 50 °C environ.

2. L'ensemble de production de flamme selon la revendication 1, dans lequel le revêtement thermosensible est conçu pour absorber l'eau en dessous d'une température de solution critique inférieure et pour libérer l'eau au-dessus de la température de solution critique inférieure.

3. L'ensemble de production de flamme selon la revendication 1 ou 2, dans lequel le revêtement thermosensible comprend un polymère thermosensible.

4. L'ensemble de production de flamme selon la revendication 3, dans lequel le polymère thermosensible est conçu pour être dans un état déployé en dessous de la température de solution critique inférieure et dans un état contracté au-dessus de la température de solution critique inférieure.

5. L'ensemble de production de flamme selon l'une quelconque revendication précédente, dans lequel la température de solution critique inférieure du revêtement thermosensible est comprise entre 35 °C environ et 55 °C environ, plus précisément entre 40 °C environ et 50 °C environ, et en particulier entre 43 °C environ et 47 °C environ.

6. L'ensemble de production de flamme selon l'une quelconque des revendications 3 à 5, dans lequel le polymère thermosensible comprend un ou plusieurs parmi poly(N-isopropylacrylamide), poly(N-vinylcaprolactam), hydroxypropylcellulose, poly[2-(diméthylamino)méthacrylate d'éthyle], poly-2-isopropyl-2-oxazoline et/ou polyéther méthylvinylique.

7. L'ensemble de production de flamme selon l'une quelconque revendication précédente, dans lequel les chaînes polymères réticulées comprennent des chaînes polymères hydrophiles.

8. L'ensemble de production de flamme selon la revendication 7, dans lequel le réseau de chaînes polymères réticulées est un hydrogel, en particulier un hydrogel qui est conçu pour absorber l'eau.

9. L'ensemble de production de flamme selon l'une quelconque revendication précédente, dans lequel le revêtement thermosensible a une épaisseur comprise entre 10 µm environ et 2000 µm environ, plus précisément entre 50 µm environ et 1000 µm environ et en particulier entre 250 µm environ et 750 µm environ.

10. L'ensemble de production de flamme selon l'une quelconque revendication précédente, dans lequel la capacité d'absorption d'eau spécifique du revêtement thermosensible est d'au moins 0,1 g/g environ, plus précisément d'au moins 1,2 g/g environ, et en particulier d'au moins 9,0 g/g environ.

11. L'ensemble de production de flamme selon l'une quelconque des revendications 3 à 10, dans lequel le revêtement thermosensible comprend entre environ 10 % en poids et environ 80 % en poids, plus précisément entre environ 20 % en poids et environ 70 % en poids et en particulier entre environ 30 % en poids et environ 60 % en poids du polymère thermosensible, par rapport au poids total du revêtement thermosensible, à l'exclusion de l'eau.

12. L'ensemble de production de flamme selon l'une quelconque revendication précédente, dans lequel le revêtement thermosensible comprend en outre un sel, en particulier du chlorure de potassium.

13. L'ensemble de production de flamme selon la revendication 12, dans lequel le revêtement thermosensible comprend entre environ 10 % en poids et environ 60 % en poids, plus précisément entre environ 20 % en poids et environ 50 % en poids et en particulier entre environ 30 % en poids et environ 40 % en poids de sel, par rapport au poids total du revêtement thermosensible, à l'exclusion de l'eau.

14. L'ensemble de production de flamme selon l'une quelconque revendication précédente, dans lequel le revêtement thermosensible est plus hydrophile à des températures en dessous de la température de solution critique inférieure qu'à des températures au-dessus de la température de solution critique inférieure et/ou dans lequel le revêtement thermosensible est plus hydrophobe à des températures au-dessus de la température de solution critique inférieure qu'à des températures en dessous de la température de solution critique inférieure.

15. Un procédé de fabrication de l'ensemble de production de flamme selon l'une quelconque des revendications précédentes, dans lequel le revêtement thermosensible est appliqué au substrat par dépôt chimique en phase vapeur.
